# EUROPÄISCHE PATENTANMELDUNG

(11) **EP 4 523 884 A1**
(43) Veröffentlichungstag der Anmeldung: **19.03.2025**
(21) Anmeldenummer: 24200435.6
(22) Anmeldetag: 14.09.2024
(51) Int. Cl.: B29C 48/40, B29C 48/385, B29C 48/25, B29B 7/48, B29B 7/74

(54) **RESSOURCENSCHONENDES DOPPELSCHNECKENEXTRUDER-SYSTEM MIT MEHREREN DOPPELSCHNECKENEXTRUDERN FÜR DIE PVC-KUNSTSTOFFVERARBEITUNG**

(30) Priorität: 17.09.2023 DE 202023105394 U
(71) Anmelder: Veka AG, 48324 Sendenhorst (DE)
(72) Erfinder: HONERPEICK, Norbert, 48324 Sendenhorst (DE)
(74) Vertreter: Cohausz Hannig Borkowski Wißgott

(57) **Zusammenfassung**

Die Erfindung betrifft ein ressourcenschonendes Doppelschneckenextruder-System mit mehreren Doppelschneckenextrudern (10; 10') für die Kunststoffverarbeitung; wenigstens umfassend einen Groß-Doppelschneckenextruder (10') und einen Klein-Doppelschneckenextruder (10), von denen jeder wenigstens umfasst: ein Extrudergehäuse (1; 1') mit einer Extruderbohrung (2; 2'), welche einen durch zwei sich überlappende Kreisquerschnitte mit einem Innendurchmesser d₁, d₂ gebildeten Querschnitt in Form einer liegenden Acht besitzt und ein Paar von in der Extruderbohrung (2; 2') rotierend angeordneten, ineinander kämmenden Extruderschneckenwellen (6; 6') mit wenigstens einem Schneckensteg (8), der einen Außendurchmesser D₁, D₂ besitzt, wobei bei dem Groß-Doppelschneckenextruder (10') die Innendurchmesser d₂ der Extruderbohrung (2') und die Außendurchmesser D₂ der Extruderschneckenwellen (6') jeweils um eine Verschleißzugabe ΔD größer sind als die Innendurchmesser d₁ der Extruderbohrung (2) und die Außendurchmesser D₁ der Extruderschneckenwellen (6) des Klein-Doppelschneckenextruders (10); der Achsabstand x der Extruderschneckenwellen (6; 6') bei allen Doppelschneckenextrudern (10; 10') im System gleich ist; die Längen der Extruderschneckenwellen (6; 6') und der Extruderbohrungen (2; 2') bei beiden Doppelschneckenextrudern (10; 10') gleich sind; und der Walzenspalt bei dem Klein-Doppelschneckenextruder (10) größer ist als bei dem Groß-Doppelschneckenextruder (10').

## Beschreibung

Die Erfindung betrifft ein Doppelschneckenextruder System, insbesondere ein ressourcenschonendes Doppelschneckenextruder System mit mehreren Doppelschneckenextrudern für die PVC-Kunststoffverarbeitung.

Für die Herstellung von Profilen aus PVC-Kunststoffen werden in der Regel Doppelschneckenextruder eingesetzt. Diese besitzen jeweils ein Extrudergehäuse, insbesondere mit Einsatzbuchse, mit zwei Extruderbohrungen, welche einen durch zwei sich überlappende Kreisquerschnitte gebildeten Querschnitt in Form einer liegenden Acht besitzt. Darin ist ein Paar von rotierend angetriebenen Extruderschneckenwellen angeordnet. Jede Extruderschneckenwelle besitzt wenigstens einen erhabenen Schneckensteg. Die Geometrie der Schneckenstege ist gleich. Die Extruderschneckenwellen werden so mit einem Getriebe eines Antriebs verbunden, dass ihre Querschnitte um einen bestimmten Winkel gegeneinander verdreht sind, so dass die Schneckenstege bei der Rotation der Extruderschneckenwellen ineinander kämmen.

Im Produktionsprinzip verschleißen die Doppelschneckenextruder derart, dass der über die Stege gemessene Außendurchmesser der Extruderschneckenwelle abnimmt und die Innendurchmesser der beiden Kreisquerschnitte, die gemeinsam die Extruderbohrung bilden, zunimmt. Dadurch erweitert sich der Spalt zwischen den Extruderschneckenwellen und dem Extrudergehäuse oder dessen Einsatzbuchse.

Wenn dieser Spalt für einen bestimmten Produktionsprozess, bei dem PVC mit einer bestimmten Viskosität aufbereitet und mit einem bestimmten Druck durch ein dem Extruder nachfolgendes Düsenwerkzeug gepresst werden soll, zu groß wird, kommt es vermehrt zu Überströmungen der Schneckenstege. Dadurch wird die Qualität der Kunststoffprodukte beeinträchtigt oder sogar der Produktionsprozess gestört, insbesondere da nicht ausreichend homogenisierte thermoplastische Schmelze ausgestoßen wird oder kein ausreichender Druck mehr aufgebaut werden kann. Zur Aufbereitung muss dann in der Extruderbohrung und an den Extruderschneckenwellen jeweils eine Hartmetallschicht aufgebracht werden, was insbesondere in der Extruderbohrung sehr aufwändig ist. Alternativ kann die Extruderbohrung in einer Einsatzbuchse ausgebildet sein, die in das Extrudergehäuse eingesetzt werden kann, so dass eine verschlissene Einsatzbuchse einfacher ausgetauscht werden kann.

Die Aufbereitungskosten sind in jedem Fall hoch und betragen bis zu 80 % des Neupreises eines Paars von Extruderschneckenwellen oder 150-200% einer Einsatzbuchse im Vergleich zu einem Standardzylinder.

Die Aufgabe der Erfindung besteht somit darin, die verschleißbedingten Betriebskosten eines Doppelschneckenextruder-System mit mehreren Doppelschneckenextrudern zu reduzieren.

Diese Aufgabe wird durch ein Doppelschneckenextruder-System, insbesondere ein ressourcenschonendes Doppelschneckenextruder-System mit mehreren Doppelschneckenextrudern für die PVC-Kunststoffverarbeitung mit den Merkmalen des Anspruchs 1 gelöst.

In großen Verarbeitungsanlagen für die PVC-Kunststoffverarbeitung werden für gleichartige Anwendungen meist mehrere baugleiche Doppelschneckenextruder eingesetzt, damit durch einheitliche Anschaffung, Ersatzteilbevorratung usw. eine Einsparung von Kosten erzielt wird.

Die Erfindung weicht von einer solchen betriebswirtschaftlich üblichen Maßnahme ab und setzt bereits bei der Anfangsinvestition an, indem nach der Erfindung in dem einen System zumindest ein Groß-Doppelschneckenextruder und ein Klein-Doppelschneckenextruder vorgesehen sind.

Möglich ist auch, eine Gruppe von Groß-Doppelschneckenextrudern und eine ebenso große Gruppe von Klein-Doppelschneckenextruder vorzusehen.

Die Bezeichnungen "Groß" und "Klein" drücken lediglich aus, dass die jeweiligen Nenndurchmesser größenmäßig unterschiedlich oder zueinander abgestuft sind, vorzugsweise wobei die tatsächliche Differenz im Nenndurchmesser klein ist, insbesondere nämlich weniger als 8% des Nenndurchmessers beträgt.

In beiden Gruppen von Doppelschneckenextrudern ist die jeweilige Geometrie in folgenden Punkten identisch:
- die Extruderschneckenwellen und die Extruderbohrungen sind gleich lang;
- der Achsabstand der Extruderschneckenwellen und der Extruderbohrungen ist für die Gruppe der Groß-Doppelschneckenextruder und für die Gruppe der Klein-Doppelschneckenextruder gleich.

Die Eigenschaften "gleiche Länge" und "gleicher Durchmesser" beziehen sich auf Nenndurchmesser, insbesondere auf gestufte Nenndurchmesser innerhalb einer Baureihe. Eine Abweichung der messbaren realen geometrischen Größen, die im Toleranzbereich liegt, gilt immer noch als "gleich" im Sinne der Erfindung.

Bezüglich des gleichen Achsabstands verlässt das System der Erfindung die bei der industriellen Kunststoffverarbeitung, insbesondere der PVC-Kunststoffverarbeitung üblichen Wege, denn bei einem kleineren Durchmesser der Extruderschneckenwellen wird üblicherweise ein kleinerer Achsabstand gewählt als bei größeren Durchmessern, damit der sogenannte Walzenspalt, also der Abstand zwischen der Außenseite eines Schneckenstegs an der einen Extruderschneckenwelle und dem Wellenkern an der anderen Extruderschneckenwelle, konstant bleibt. Es hat sich allerdings gezeigt, dass in demjenigen Bereich von Durchmesserdifferenzen zwischen Groß-Doppelschneckenextruder und Klein-Doppelschneckenextruder, auf den die Erfindung sich bezieht, die Vergrößerung des Walzenspalts keine spürbar negativen Auswirkungen hat.

Dabei wird nach der Erfindung verfahrenstechnisch gewährleistet, dass sowohl die Verwendung von Groß-Doppelschneckenextrudern wie auch von Klein-Doppelschneckenextrudern zu einer einwandfreien Produktion von Kunststoffextrusionsprofilen oder dergleichen führt.

Das Doppelschneckenextruder-System der Erfindung sieht außerdem vor, dass bei dem Groß-Doppelschneckenextruder der Innendurchmesser d der Extruderbohrung und die Außendurchmesser D der Extruderschneckenwellen jeweils um eine Verschleißzugabe ΔD größer sind als bei dem Klein-Doppelschneckenextruder.

Betrachtet wird bei den Extruderschneckenwellen stets der über die Stege gemessene äußere Durchmesser. Der innere Durchmesser, der sich auf den Kern der Extruderschneckenwellen zwischen den Stegen bezieht, ist beim Groß-Doppelschneckenextruder wie auch beim Klein-Doppelschneckenextruder gleich.

Bei dem Doppelschneckenextruder-System der Erfindung können sowohl zylindrische Extruderschneckenwellen und zylindrische Extruderbohrungen gewählt werden, bei denen die Extruderschneckenwellen parallel zueinander angeordnet sind, wie auch konische Formen von Extruderbohrung und Schneckenwellen, die in einem spitzen Winkel zueinander ausgerichtet sind.

Außerdem ist das Doppelschneckenextruder-System der Erfindung sowohl für gleichläufige Doppelschneckenextruder wie auch für gegenläufige Doppel schneckenextruder geeignet.

Mit diesen geometrischen Voraussetzungen wird ein ressourcenschonendes Doppelschneckenextruder-System gebildet, und es kann ein ressourcenschonendes Betriebsverfahren zur Nutzung des Doppelschneckenextruder-Systems mit mehreren Doppelschneckenextrudern für die PVC Kunststoffverarbeitung folgendermaßen durchgeführt werden:
In einem (nach den geometrischen Vorgaben des ressourcenschonenden Doppelschneckenextruder-Systems konfigurierten) Groß-Doppelschneckenextruder und einem Klein-Doppelschneckenextruder wird jeweils PVC bis zum Erreichen einer Verschleißgrenze verarbeitet.

Danach werden die Extruderschneckenwellen des Groß-Doppelschneckenextruders nachbearbeitet, insbesondere wobei ihr Außendurchmesser auf den Nenndurchmesser des Klein-Doppelschneckenextruders reduziert wird. Die Extruderbohrung im Extrudergehäuse des Klein-Doppelschneckenextruders bzw. in einer Einsatzbuchse darin wird auf den Nenndurchmesser des Groß-Doppelschneckenextruders erweitert. Vorzugsweise sind diese beiden Bearbeitungsschritte durch bloßen Materialabtrag, z. B. durch Schleifen und/oder Hohnen durchführbar, insbesondere sehr kostengünstig durchführbar.

Die aufbereiteten, im Durchmesser reduzierten Extruderschneckenwellen, die aus dem Groß-Doppelschneckenextruder stammen, werden in einer neuen Einsatzbuchse oder einem neuen Extrudergehäuse des Klein-Doppelschneckenextruders mit kleinem Nenndurchmesser weiterverwendet. Die aufbereitete Einsatzbuchse bzw. das aufbereitete Extrudergehäuse, das von dem Klein-Doppelschneckenextruder stammt, wird als Einsatzbuchse oder Extrudergehäuse im Groß-Doppelschneckenextruder mit großem Nenndurchmesser weiterverwendet.

Statt zwei Schneckenpaaren und zwei Einsatzbuchsen oder Gehäusen brauchen also in dem erfindungsgemäßen System nur ein Schneckenpaar und eine Einsatzbuchse oder Gehäuse entsorgt oder einer kostenintensiven Aufbereitung mit Hartmetallauftrag zugeführt werden, während das andere Schneckenpaar und die andere Einsatzbuchse oder Gehäuse mit nur sehr geringem Bearbeitungsaufwand weiterverwendbar sind.

Die Abstufungen oder Unterschiede der Nenndurchmesser von Groß-Doppelschneckenextruder und Klein-Doppelschneckenextruder sind vorzugsweise klein und betragen bevorzugt 2% bis 8% oder liegen zwischen 2% und 8% des Nenndurchmessers, insbesondere des Nenndurchmesser des Groß- oder des Klein-Doppelschneckenextruders. In üblichen Herstellerbaureihen werden direkt aufeinander folgende Typen mit gleichem Achsabstand ausgewählt.

Nachfolgend wird ein Beispiel eines ressourcenschonendes Doppelschneckenextruder-Systems mit zwei Doppelschneckenextrudern (DSE) angegeben:

| | Klein-DSE | Groß-DSE |
|---|---|---|
| Typ der Baureihe | 1 | 2 |
| Achsabstand | 88 mm | 88 mm |
| Nenndurchmesser der Extruderbohrung d | 103,5 mm | 106,5 mm |
| Nenndurchmesser der Extruderschneckenwelle D | 103 mm | 106 mm |

Der Größenunterschied zwischen den beiden Typen beträgt bei diesem Beispiel 3mm; dies stellt zugleich die Verschleißzugabe ΔD dar. Der während des Produktionsbetriebs beider Doppelschneckenextruder auftretende Verschleiß muss überwacht werden und unterhalb der maximalen Verschleißzugabe ΔD bleiben, damit noch eine Nachbearbeitung und anschließende Wiederverwendung bei dem jeweils anderen Typ möglich ist.

Grundsätzlich möglich sind bei dem Doppelschneckenextruder-System der Erfindung auch kaskadierende Modelle mit mehr als zwei Größen von Doppelschneckenextrudern, bei denen die Extruderbohrungen mindestens ein zweites Mal erweitert und die Extruderschneckenwellen mehrfach im Durchmesser reduziert werden, so dass ein solches System neben einem Groß-Doppelschneckenextruder und einem Klein-Doppelschneckenextruder zumindest noch einen Mittel-Doppelschneckenextruder umfasst. In diesem Fall sind zwei Kopplungsdurchmesser gegeben, wobei zwischen dem Klein-Doppelschneckenextruder und dem Mittel-Doppelschneckenextruder ein erster Kopplungsdurchmesser und zwischen dem Mittel-Doppelschneckenextruder und dem Groß-Doppelschneckenextruder ein zweiter Kopplungsdurchmesser ausgewählt ist. In dieser Variante des Systems ist dann ein Subsystem gegeben, das den Klein-Doppelschneckenextruder und den Mittel-Doppelschneckenextruder umfasst, wobei letzterer in diesem Subsystem als Groß-Doppelschneckenextruder angesehen wird, um die Erfindung anzuwenden. Ein zweites Subsystem umfasst den Mittel-Doppelschneckenextruder und den Groß-Doppelschneckenextruder, wobei der Mittel-Doppelschneckenextruder in diesem Subsystem als Klein-Doppelschneckenextruder angesehen wird, um die Erfindung anzuwenden.

Die Durchschleusrichtung durch das System ist wie bei der einfachen Ausführungsform mit nur zwei Stufen:
- Ein neues Extrudergehäuse oder eine neue Einsatzbuchse ist zunächst in dem Doppelschneckenextruder mit dem kleinsten Innendurchmesser der Extruderbohrung und abschließend in dem Doppelschneckenextruder mit dem größten Innendurchmesser der Extruderbohrung verwendbar.
- Zugleich ist ein neues Paar von Extruderschneckenwellen zunächst in dem Doppelschneckenextruder mit dem größten Innendurchmesser der Extruderbohrung und abschließend in dem Doppelschneckenextruder mit dem kleinsten Innendurchmesser der Extruderbohrung verwendbar.

Der limitierende Faktor für die Nachbearbeitung und Wiederverwendung ist in jedem Fall, also sowohl in einem System mit nur zwei Stufen wie auch bei einem kaskadierenden System mit mehr als zwei Stufen, die Beziehung von festem Achsabstand und der durch die Nachbearbeitungsschritte reduzierten Schneckensteghöhe. Diese muss nach jedem Nachbearbeitungsschritt noch ausreichend groß sein, um Einzug, Plastifizierung und Druckaufbau des verarbeiteten Kunststoffs bewirken zu können.

Die Erfindung wird nachfolgend mit Bezug auf das in den Zeichnungen dargestellte Ausführungsbeispiel näher erläutert. Die Figuren zeigen im Einzelnen:
- Fig. 1: einen Doppelschneckenextruder in einem stark vereinfachten Längsschnitt;
- Fig. 2: einen Teilschnitt eines Doppelschneckenextruder mit einem Paar von Extruderschneckenwellen;
- Fig. 3: einen Querschnitt durch eine Extruderbohrung; und
- Fig. 4: das Doppelschneckenextruder-System mit mehreren Doppelschneckenextrudern nach der Erfindung in einer schematischen Übersicht.

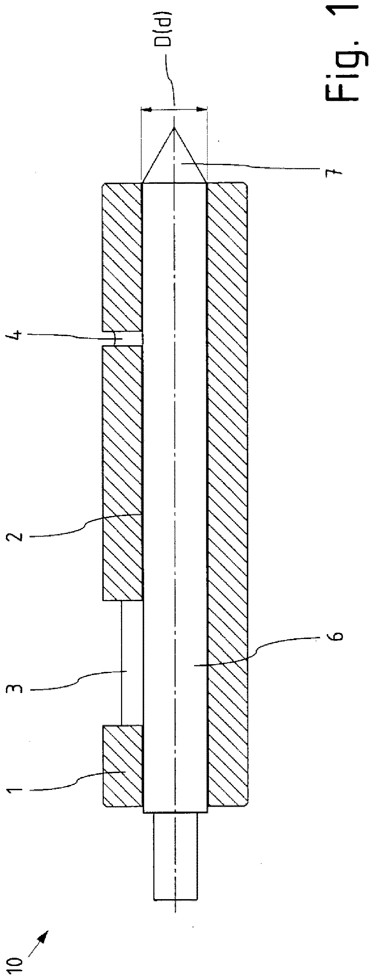

In Figur 1 ist ein an sich bekannter Aufbau eines Doppelschneckenextruders 10 in einem stark vereinfachten Längsschnitt in einer vertikalen Schnittebene gezeigt. Durch ein Extrudergehäuse 1, insbesondere dessen Einsatzbuchse, erstreckt sich längs eine Extruderbohrung 2. Darin ist ein Paar rotierbarer Extruderschneckenwellen 6 mit je einer Spitze 7 und einem hier nicht gezeigten Schneckensteg angeordnet. Fester, insbesondere pulverförmiger Kunststoff wird durch eine Einzugsöffnung 3 eingezogen und wird aufgrund der Orientierung des Schneckenstegs der rotierenden Extruderschneckenwelle 6 in Richtung der Spitze 7 gefördert und dabei aufgeschmolzen. Über eine an die Entgasungsöffnung 4 angelegte Saugleitung wird die plastifizierte Masse entgast.

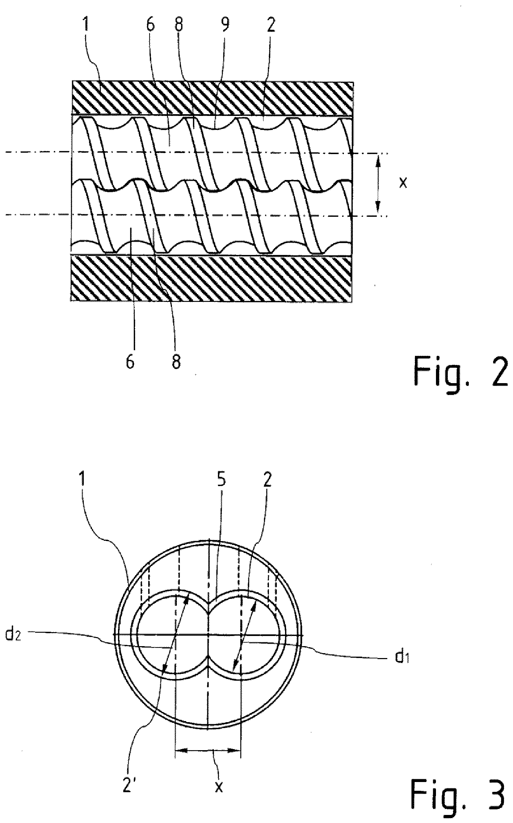

Figur 2 zeigt einen Teil eines Längsschnitts eines Doppelschneckenextruders in einer horizontalen Schnittebene, wodurch das Paar nebeneinander angeordneter Extruderschneckenwellen 6 sichtbar ist. Die Extruderschneckenwellen 6 kämmen ineinander, indem der Schneckensteg 8 der einen Extruderschneckenwelle 6 in die Täler 9 zwischen benachbarten Abschnitten des Schneckenstegs 8 an der anderen Extruderschneckenwelle 6 greift. Zwischen den Extruderschneckenwellen 6 besteht ein Achsabstand x.

Figur 3 zeigt einen Querschnitt durch das Extrudergehäuse 1. Die innere Kontur ist durch zwei sich überschneidende Kreisquerschnitte mit einem Innendurchmesser d₁ gebildet und hat die Form einer liegenden Acht. Diese Kontur entspricht der Extruderbohrung 2 bei einem unverschlissenen Klein-Doppelschneckenextruder.

Ebenfalls ist in Figur 3 die äußere Kontur einer Extruderbohrung 2' mit einem größeren Innendurchmesser d₂ gezeigt. Diese Kontur entspricht der Extruderbohrung 2 bei einem unverschlissenen Groß-Doppelschneckenextruder. Der Bereich zwischen den beiden Konturen der Extruderbohrungen 2, 2' entspricht einer für Verschleiß und Nachbearbeitung verfügbaren Schicht 5.

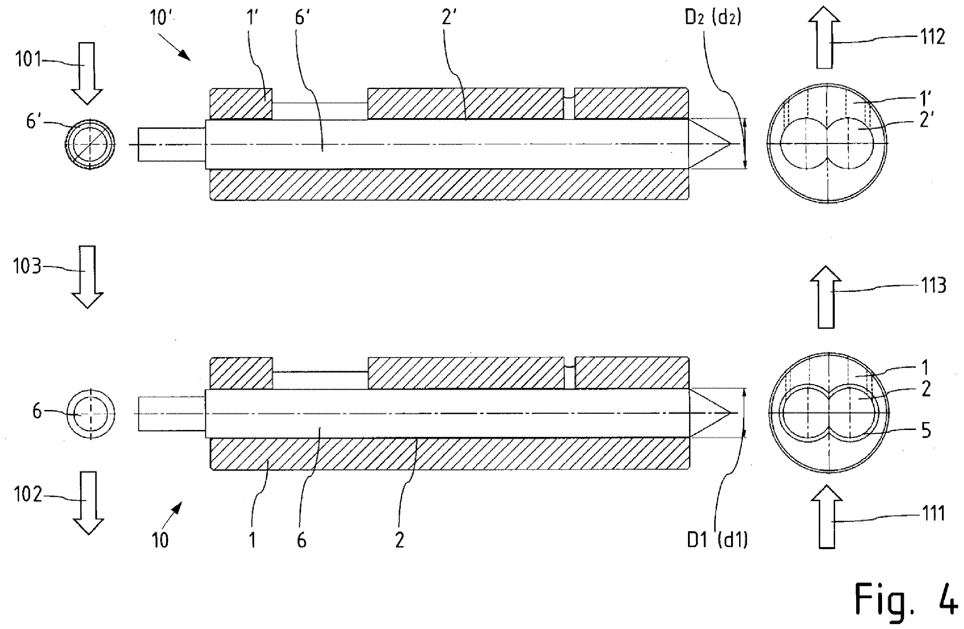

Das Doppelschneckenextruder-System nach der Erfindung und ein Betriebsverfahren zu seiner Nutzung werden anhand der Figur 4 beschrieben.

In einem Vorbereitungsschritt 101 wird ein Paar von Extruderschneckenwellen 6' mit einem Außendurchmesser D₂ mit einem Extrudergehäuse 1' mit einer Extruderbohrung 2' mit Innendurchmesser d₂ zu einem Groß-Doppelschneckenextruder 10' kombiniert.

Zugleich wird in einem weiteren Vorbereitungsschritt 111 ein Paar von Extruderschneckenwellen 6 mit einem Außendurchmesser D₁ mit einem Extrudergehäuse 1 mit einer Extruderbohrung 2 mit Innendurchmesser d₁ zu einem Klein-Doppelschneckenextruder 10 kombiniert.

Während einer ersten Produktionsphase nimmt der Außendurchmesser aller Extruderschneckenwellen 6, 6' ab. Im Schritt 102 werden die verschlissenen Extruderschneckenwellen 6 des Klein-Doppelschneckenextruders 10 aus dem System ausgeschleust.

Die verschlissenen Extruderschneckenwellen 6' des Groß-Doppelschneckenextruders 10' werden im Aufbereitungsschritt 103 aufbereitet, z. B. durch Rundschleifen, so dass sie nun den für den Klein-Doppelschneckenextruder 10 geeigneten Außendurchmesser D₁ aufweisen und bei diesem, zusammen mit einem neuen Extrudergehäuse 1 oder einer neuen Einsatzbuchse dafür, in einer weiteren Produktionsphase nutzbar sind.

Außerdem sind in der ersten Produktionsphase die Extruderbohrungen 2, 2' beider Doppelschneckenextruder 10; 10' verschlissen, wodurch die Durchmesser d der Bohrungen darin vergrößert sind. Im Schritt 112 wird das Extrudergehäuse 1' des Groß-Doppelschneckenextruders 10' oder dessen Einsatzbuchse wegen seiner verschlissenen Extruderbohrung 2' ausgeschleust.

Das Extrudergehäuse 1 oder dessen Einsatzbuchse des Klein-Doppelschneckenextruders 10 mit der verschlissenen Extruderbohrung 2 wird im Aufbereitungsschritt 113 aufbereitet, insbesondere indem die Extruderbohrung 2 erweitert, z.B. aufgehohnt wird und danach den Durchmesser d₂ besitzt, so dass sie als Extrudergehäuse 1' / Einsatzbuchse mit der Extruderbohrung 2' mit dem Innendurchmesser d₂ im Groß-Doppelschneckenextruder 10' einsetzbar ist.

In dem erfindungsgemäßen System werden also aus einer Auswahl von verschiedenen Extrudern einer Baureihe mit gleichem Achsabstand nur bei der ersten Ausstattung zwei Extrudergehäuse 1, 1' / Einsatzbuchsen und zwei dazu in der Größe passende Paare von Extruderschneckenwellen 6, 6' bestellt bzw. gefertigt. Nachfolgend wird dann stets nur ein Extrudergehäuse 1 / Einsatzbuchse mit dem kleinsten Durchmesser der Extruderbohrung 2 bestellt bzw. gefertigt sowie ein Paar von Extruderschneckenwellen 6' mit dem größten Durchmesser.

Aus den Schnittdarstellungen in Figur 4 bzw. in Figur 3 wird auch deutlich, warum bei allen in das System integrierbaren Typen von Doppelschneckenextrudern der gleiche Achsabstand x erforderlich ist: Zwar könnten nach dem Aufbereitungsschritt 103 die auf den Durchmesser d₁ reduzierten Extruderschneckenwellen auch in einer Extruderbohrung mit kleinerem Durchmesser und zugleich mit kleinerem Achsabstand eingesetzt werden. Das Recycling eines Extrudergehäuses 1 bzw. einer Einsatzbuchse dafür ist hingegen nur möglich, wenn in beiden Nutzungsphasen der Achsabstand gleich ist und als Aufbereitungsmaßnahme eine symmetrische Aufweitung der Extruderbohrung vorgenommen wird. Das heißt, dass das jeweilige Zentrum der Kreisquerschnitte der Extruderbohrungen bei der Aufbereitung erhalten bleibt.

## Patentansprüche

1. Doppelschneckenextruder-System mit mehreren Doppelschneckenextrudern (10; 10') für die Kunststoffverarbeitung,
wenigstens umfassend einen Groß-Doppelschneckenextruder (10') und einen Klein-Doppelschneckenextruder (10), von denen jeder wenigstens umfasst:
• ein Extrudergehäuse (1; 1') mit einer Extruderbohrung (2; 2'), welche einen durch zwei sich überlappende Kreisquerschnitte mit einem Innendurchmesser d₁, d₂ gebildeten Querschnitt in Form einer liegenden Acht besitzt, und
• ein Paar von in der Extruderbohrung (2; 2') rotierend angeordneten, ineinander kämmenden Extruderschneckenwellen (6; 6') mit wenigstens einem Schneckensteg (8), der einen Außendurchmesser D₁, D₂ besitzt, wobei
• bei dem Groß-Doppelschneckenextruder (10') die Innendurchmesser d₂ der Extruderbohrung (2') und die Außendurchmesser D₂ der Extruderschneckenwellen (6') jeweils um eine Verschleißzugabe ΔD größer sind als die Innendurchmesser d₁ der Extruderbohrung (2) und die Außendurchmesser D₁ der Extruderschneckenwellen (6) des Klein-Doppelschneckenextruders (10);
• der Achsabstand x der Extruderschneckenwellen (6; 6') bei allen Doppelschneckenextrudern (10; 10') im System gleich ist;
• die Längen der Extruderschneckenwellen (6; 6') und der Extruderbohrungen (2; 2') bei beiden Doppelschneckenextrudern (10; 10') gleich sind; und
• der Walzenspalt bei dem Klein-Doppelschneckenextruder (10) größer ist als bei dem Groß- Doppelschneckenextruder (10').

2. Doppelschneckenextruder-System nach Anspruch 1, **dadurch gekennzeichnet, dass** der Innendurchmesser und der Außendurchmesser bei dem Klein-Doppelschneckenextruder (10) um 2% bis 8% des Nenndurchmessers kleiner ist als bei dem Groß- Doppelschneckenextruder (10').

3. Doppelschneckenextruder-System nach Anspruch 1 oder 2, **dadurch gekennzeichnet, dass** die Extruderschneckenwellen (6; 6') und die Extruderbohrungen (2; 2') zylindrisch sind und parallel zueinander angeordnet sind.

4. Doppelschneckenextruder-System nach einem der Ansprüche 1 bis 3, **dadurch gekennzeichnet, dass** die Extruderschneckenwellen und die Extruderbohrungen jeweils konisch mit gleichem Konuswinkel sind und in einem spitzen Winkel zueinander angeordnet sind.

5. Doppelschneckenextruder-System einem der vorhergehenden Ansprüche, **dadurch gekennzeichnet,**
• **dass** mehr als zwei im Nenndurchmesser abgestufte Größen von Doppelschneckenextrudern vorgesehen sind, wobei benachbarte Größen jeweils ein Subsystem mit einem Groß-Doppelschneckenextruder und einem Klein-Doppelschneckenextruder bilden,
• **dass** ein neues Extrudergehäuse oder Einsatzbuchse zunächst in dem Doppelschnecken-extruder mit dem kleinsten Innendurchmesser der Extruderbohrung und abschließend in dem Doppelschneckenextruder mit dem größten Innendurchmesser der Extruderbohrung verwendbar ist, und
• **dass** ein neues Paar von Extruderschneckenwellen zunächst in dem Doppelschneckenextruder mit dem größten Innendurchmesser der Extruderbohrung und abschließend in dem Doppelschneckenextruder mit dem kleinsten Innendurchmesser der Extruderbohrung verwendbar ist.

6. Betriebsverfahren für ein Doppelschneckenextruder-System mit einem Groß-Doppelschneckenextruder und einem Klein-Doppelschneckenextruder, insbesondere nach einem der vorhergehenden Ansprüche, umfassend folgende Schritte:
• in dem Groß-Doppelschneckenextruder und dem Klein-Doppelschneckenextruder wird jeweils PVC bis zum Erreichen einer Verschleißgrenze verarbeitet,
• danach werden die Extruderschneckenwellen des Groß-Doppelschneckenextruders nachbearbeitet, insbesondere wobei ihr Außendurchmesser auf den Nenndurchmesser des Klein-Doppelschneckenextruders reduziert wird, und die Extruderbohrung im Extrudergehäuse des Klein-Doppelschneckenextruders oder in einer Einsatzbuchse darin wird auf den Nenndurchmesser des Groß-Doppelschneckenextruders erweitert,
• die aufbereiteten, im Durchmesser reduzierten Extruderschneckenwellen, die aus dem Groß-Doppelschneckenextruder stammen, werden in einer neuen Einsatzbuchse oder einem neuen Extrudergehäuse des Klein-Doppelschneckenextruders mit kleinem Nenndurchmesser weiterverwendet und die aufbereitete Einsatzbuchse oder das aufbereitete Extrudergehäuse, die/das von dem Klein-Doppelschneckenextruder stammt, wird als Einsatzbuchse oder Extrudergehäuse im Groß-Doppelschneckenextruder mit großem Nenndurchmesser weiterverwendet.
